# EUROPÄISCHE PATENTSCHRIFT

(11) **EP 1 285 837 B1**
(45) Veröffentlichungstag und Bekanntmachung des Hinweises auf die Patenterteilung: **18.05.2005**
(21) Anmeldenummer: 01810798.7
(22) Anmeldetag: 17.08.2001
(51) Int. Cl.: B61D 17/08, B62D 31/02, F16B 7/18

(54) **Strukturgerippe einer Wagenkastenkonstruktion**
Framework of the bodyshell of a vehicle
Ossature d' une caisse de véhicule

(43) Veröffentlichungstag der Anmeldung: 26.02.2003
(73) Patentinhaber: Alcan Technology & Management AG, 8212 Neuhausen am Rheinfall (CH)
(72) Erfinder: Streiff, Samuel, 5210 Windisch (CH); Dallo, Gino, 5600 Lenzburg (CH)

(56) Entgegenhaltungen:
- EP-A- 0 232 832
- EP-A- 0 838 384
- US-A- 2 247 273
- US-A- 5 287 813

## Beschreibung

Vorliegende Erfindung betrifft ein Gerippe, insbesondere ein Strukturgerippe, einer Wagenkastenkonstruktion, insbesondere für Strassen- oder Schienenfahrzeuge zur Personenbeförderung, gemäss dem Oberbegriff nach Anspruch 1.

Die Seitenwandstrukturen eines Gerippes für genannte Wagenkastenkonstruktionen werden in der Regel aus längslaufenden und vertikal laufenden Profilen gebildet, welche an ihren in der Regel kreuzstossartigen Verbindungsstellen mittels Schweissen, Schrauben oder Nieten miteinander verbunden sind. Mit längslaufenden Profilen, nachfolgend Längsprofile genannt, sind insbesondere längslaufende Profilstäbe, Brüstungsprofile und Gurtprofile, wie Boden-, Sockel-, Dach-, und Mittelgurten, gemeint. Mit vertikal laufenden Profilen, nachfolgend Vertikalprofile genannt, sind insbesondere vertikal laufende Profilstäbe, Profilpfosten, wie Türpfosten, Vertikalsäulen, wie Seitenwandsäulen und Fenstersäulen, gemeint. Die Fenstersäulen sind im Bereich der Fensterverglasung angeordnet und unterteilen die Fensterfront in Segmente bzw. Abschnitte. Die Türpfosten dienen der seitlichen Begrenzung der Einstiegsöffnungen in der Seitenwandstruktur.

Wagenkastenkonstruktionen für Omni- bzw. Autobusse üblicher Bauart weisen vornehmlich ein mit ihrer Aussenkontur bündig verlaufendes Strukturgerippe auf, an welchem aussenseitig Verkleidungselemente, wie Schürzen und Blenden, sowie die Verglasung der Fensterbereiche angebracht sind. Aussenseitig bedeutet in vorliegender Beschreibung zur Wagenkastenaussenseite hin angeordnet oder liegend und innenseitig dementsprechend zur Wagenkasteninnenseite hin angeordnet oder liegend.

Die genannten Längs- und Vertikalprofile der Seitenwandstruktur sind strukturelle Elemente der Wagenkastenkonstruktion. Sie tragen massgeblich zur Steifigkeit und Festigkeit der Wagenkastenkonstruktion bei. Entsprechend hoch sind deshalb auch die Anforderungen an die Verbindungsstellen zwischen Längs- und Vertikalprofilen bezüglich ihrer mechanischen Eigenschaften.

Übliche Seitenwandstrukturen enthalten in der Regel dachwärtig verlaufende Dachgurten, bodenwärtig verlaufende Boden- oder Sockelgurten sowie vertikal verlaufend Seitenwandpfosten. Ferner enthalten die Seitenwandstrukturen zur weiteren Versteifung der Wagenkastenkonstruktion zwischen Boden- und Dachgurten verlaufende Längsprofile, wie Mittelgurtprofile bzw. Brüstungsprofile.

Die Längs- und Vertikalprofile der Seitenwandstruktur liegen üblicherweise aussenseitig fluchtend in einer Ebene, der sogenannten Seitenwandebene. Die Verbindungsstellen zwischen Längs- und Vertikalprofilen sind deshalb in der Regel kreuzstossartig ausgebildet, d.h. das eine Profil ist an der Verbindungsstelle jeweils unterbrochen und liegt stirnseitig dem durchgehend querenden Profil an. Die beiden Profile sind beispielsweise mittels Eckverbindungen gegenseitig verschraubt oder verschweisst.

In einer ersten bekannten Ausführung einer Seitenwandstruktur sind die Längsprofile, namentlich die Dach-, Mittel- und Bodengurte an den Verbindungsstellen zu den Vertikalprofilen, namentlich den Wandsäulen, als durchgehende Längsprofile ausgebildet, welche lediglich an den Türöffnungen unterbrochen sind. Die Vertikalprofile sind jeweils an den Verbindungsstellen unterbrochen, wobei diese mit ihrer Stirnseite jeweils einer Längsseite der Längsprofile anliegen und mittels Eckverbindungen mit diesen verschraubt oder verschweisst sind.

Es sind ferner Seitenwandstrukturen bekannt, bei welchen die Vertikalprofile durchgehend und die Längsprofile an den kreuzartigen Verbindungsstellen als unterbrochene Profile ausgebildet sind. Die Längsprofile liegen hier mit ihren Stirnseiten einer Längsseite der Vertikalprofile an und sind mittels Eckverbindungen mit diesen verschraubt oder verschweisst.

Überdies sind auch Seitenwandstrukturen bekannt, bei welchen sowohl die Längsprofile als auch die Vertikalprofile an den kreuzartigen Verbindungsstellen durchgehend ausgebildet sind, wobei in dieser Ausführung die Vertikalprofile die Längsprofile innenseitig hinterqueren. Diese Seitenwandstruktur bildet jedoch aussenseitig keine fluchtende Ebene aus und die Vertikalprofile müssen im Falle einer Reparatur in aufwendiger Demontage aus ihrer Hinterquerung gelöst werden. Ferner hat sich gezeigt, dass solche Seitenwandstrukturen übermässig grosse Wanddicken aufweisen, welche aufgrund gesetzlicher Bestimmungen bezüglich maximaler Geamtfahrzeugbreite und minimaler Fahrzeuginnenraumbreite schwer zu realisieren sind.

Es sind auch Seitenwandkonstruktionen bekannt, bei welchen an den kreuzartigen Verbindungsstellen von durchgehenden Vertikal- und Längsprofilen in einem der beiden Profilen Unterbrüche in Form von Ausfräsungen vorgesehen sind. Diese Ausfräsungen bedingen jedoch wieder zusätzliche Fertigungsschritte und komplizieren daher das Fertigungsverfahren.

Die EP 0 838 384 A1 beschreibt einen Fahrzeugkasten mit Seitenwänden, welche eine fachwerkartige Tragkonstruktion enthalten. Die Tragkonstruktion enthält einen Ober- und Untergurt sowie mehrere, diese verbindenden Füllstäbe, welche paarweise, mit innerhalb des Höhenbereichs einer Fensteröffnung der Seitenwand sich X-förmig kreuzenden Längsachsen, angeordnet sind. Die Füllstäbe hinterqueren die Gurtprofile und sind mit diesen verbunden.

Die US 5,287,813 beschreibt eine Wagenkastenkonstruktion mit Längs- und Vertikalprofilen, welche miteinander verbunden sind. Die Vertikalprofile hinterqueren dabei unter Ausbildung von kreuzartigen Verbindungsstellen die Längsprofile.

Aufgabe vorliegender Erfindung ist ein Gerippe einer Wagenkastenkonstruktion mit einer Seitenwandstruktur vorzuschlagen, welche sich durch gute Festigkeit und Steifigkeit, eine hohe Montage- und Reparaturfreundlichkeit sowie durch eine grosse Designfreiheit auszeichnet.

Erfindungsgemäss wird die Aufgabe durch die kennzeichnenden Merkmale des Anspruchs 1 gelöst.

Kreuzartig bedeutet in vorliegender Beschreibung, dass sich die beiden Profile in einem Winkel kreuzen, welcher um 90° (Winkelgrade) beträgt.

Hinterqueren bedeutet in vorliegender Beschreibung, dass das betreffende Profil hinter dem kreuzenden zweiten Profil unterbruchlos bzw. vollständig durchläuft.

Das oder die Längsprofile enthalten vorzugsweise eine, zwei oder mehrere parallel verlaufende, aussenseitig angeordnete und in Profillängsrichtung verlaufende hinterschnittene Längsnuten bzw. C-Nuten, wobei die hinterschnittenen Längsnuten das oder die Vertikalprofile an der oder den kreuzartigen Verbindungsstellen hinterqueren und der innenseitigen Seitenfläche des bzw. der Vertikalprofile anliegen. Die genannten Längsnuten dienen der lösbaren Verbindung mit dem Vertikalprofil. Sind im Längsprofil zwei oder mehr der genannten Längsnuten vorgesehen, so lässt sich eine erhöhte Festigkeit und Steifigkeit der Verbindung erreichen. Längsnuten bedeutet in vorliegender Beschreibung in Längsrichtung des Profils und vorzugsweise parallel zu dessen Seitenkanten verlaufende Nuten.

Das Längs- und Vertikalprofil sind an besagter kreuzartigen Verbindungsstelle vorzugsweise über eine oder mehrere Schraubverbindungen miteinander verbunden, wobei die Schraubverbindung aus einer das Vertikalprofil oder ein Verbindungselement durchsetzenden und in die Gewindebohrung eines in die hinterschnittene Längsnut des Längsprofils eingebrachten Einlageteils eingreifenden Schraube besteht. Das Einlageteil hintergreift bei festgezogener Schraube die hinterschnittene Längsnut klemmend und fixiert dadurch das Vertikalprofil an das Längsprofil.

Das Einlageteil ist in dieser Ausführung und in allen nachfolgenden erfindungsgemässen Ausführungen und Weiterbildungen, welche genannte Einlageteile einsetzen, vorzugsweise ein als Parallelogramm ausgebildetes und in die hinterschnittene Längsnut des Längsprofils einschwenkbares Plättchen bzw. Klemmstück. Das Einlageteil kann ferner ein oder mehrere Gewindebohrungen zur Aufnahme von einer oder mehrere Schrauben aufweisen. Das Einlageteil kann ferner in Form einer Einlageleiste, insbesondere einer prismenförmigen Einlageleiste, ausgeführt sein, welche seitlich in die hinterschnittene Nut einführbar ist. Die Einlageleiste weist eine, vorzugsweise zwei oder mehrere Bohrungen, insbesondere Gewindebohrungen, zur Aufnahme von einer, vorzugsweise zwei oder mehreren, Schraubverbindungen auf. Die Einlageleiste kann beispielsweise derart bemessen und angeordnet sein, dass diese das Vertikalprofil hinterquert und die beidseitig am Vertikalprofil angeordneten Schraubverbindungen aufnimmt.

In besonderer Ausgestaltung der Erfindung kreuzt das Vertikalprofil das Längsprofil unterbruchslos, wobei in diesem Fall das Längsprofil das Vertikalprofil vollständig hinterquert. Das Vertikalprofil kann jedoch an der kreuzartigen Verbindungsstelle unterbrochen sein, und mit dessen Stirnseite kreuzstossartig dem Längsprofil anstossen, wobei das Vertikalprofil das Längsprofil wenigstens teilweise übergreift, d.h. das Längsprofil hinterquert das Vertikalprofil wenigstens teilweise und mit wenigstens einer hinterschnittenen Längsnut.

Das Längsprofil enthält in bevorzugter Ausführung wenigstens zwei parallel zur Seitenwandebene verlaufende und durch eine in Profillängsrichtung verlaufende Abstufung gegeneinander senkrecht zur Seitenwandebene versetzte aussenseitige Seitenflächen, wobei die zum Wagenkasteninneren versetzte Seitenfläche bzw. Seitenflächen wenigstens eine hinterschnittene Längsnut enthält bzw. enthalten und das Vertikalprofil hinterquert bzw. hinterqueren, und die zur Wagenkastenaussenseite versetzte Seitenfläche mit der aussenseitigen Seitenfläche des Vertikalprofils fluchtet. Die Seitenwandebene wird hierbei durch die gemeinsam fluchtenden aussenseitigen Seitenflächen der Vertikalprofile begründet.

In besonderer Weiterbildung der Erfindung kann eine und vorzugsweise beide, quer, insbesondere senkrecht, zur Seitenwandebene verlaufende Seitenquerfläche des Vertikalprofils eine, zwei oder mehrere hinterschnittene Längsnuten enthalten. Die Vertikalprofile können in dieser Weiterbildung über bekannte Eckverbindungselemente mit dem kreuzenden Längsprofil verbunden sein. Die Befestigung erfolgt über Schraubverbindungen, wobei Schrauben das Eckverbindungselement durchsetzen und in die Gewindebohrung von Einlageteilen eingreifen, welche in die hinterschnittenen Längsnuten sowohl des Längsprofils als auch des Vertikalprofils eingebracht sind. Die Einlageteile hintergreifen bei festgezogener Schraubverbindung die hinterschnittene Längsnut klemmend und fixieren dadurch das Vertikalprofil via Eckverbindungelement an das Längsprofil. Das Eckverbindungselement ist in dieser Ausführung quer, insbesondere senkrecht, zur Seitenwandebene orientiert.

Das Eckverbindungselement kann als Eckstück oder Winkelstück ausgebildet sein. Das Eckstück kann ein Guss-, Schweiss-, Schmiede- oder Frästeil sein. Das Eckverbindungselement kann ferner in Ausführung eines Gleitkörpers seitlich in die hinterschnittene Nut einführbar ausgebildet sein, wobei das Eckverbindungselement die hinterschnittene Nut hintergreift, so dass das Eckelement in der quer zur Einführrichtung liegenden und durch die Nutlängsöffnung führende Achse fixiert bzw. verankert ist.

Beispiele von oben genannten Eckverbindungen, welche bezüglich ihrer Funktionsweise auf vorliegende Erfindung anwendbar sind, sind in den Veröffentlichungsschriften EP 0 136 264 A2, EP 0 671 566 B1 und EP 0 806 338 B1 beschrieben, auf welche hiermit ausdrücklich Bezug genommen wird.

Die Längs- und Vertikalprofile sind beispielsweise mittels eines Extrusions- oder Pulltrusionsverfahrens hergestellte Profile. Die Längs- und Vertikalprofile sind vorzugsweise aus Metall wie Eisen oder Stahl und insbesondere aus einem Leichtmetall wie Aluminium und dessen Legierungen. Besonders geeignet sind Strangpressprofile aus einem Leichtmetall, insbesondere aus Aluminium oder einer Aluminiumlegierung. Ferner können die Profile auch aus umgeformten Blechen sein.

Die genannten Profile können weiters auch aus Kunststoff, insbesondere aus faserverstärktem Kunststoff sein. Ferner können die Profile auch Hybridprofile sein, welche aus in Längsrichtung zusammengesetzten, insbesondere geklebten, Teilprofilen bestehen, wobei ein erstes Teilprofil aus einem Metall, insbesondere Aluminium und seinen Legierungen, und ein zweites Teilprofil aus faserverstärktem, insbesondere glas- oder kohlefaserverstärktem, Kunststoff ist.

Die Längs- und Vertikalprofile können offene Profile, wie Winkelprofile oder Rinnenprofile, halboffene Profile oder geschlossene Profile, wie Ein- oder Mehrkammerhohlprofile, sein.

Bei den genannten Vertikalprofilen handelt es sich insbesondere um Seitenwand- bzw. Fenstersäulen sowie Türpfosten. Bei den Längsprofilen handelt es sich um längslaufende Profile, die einen oberen und unteren Abschluss der Seitenwandstruktur ausbilden, wie Dachgurten oder Bodengurten bzw. Sockelgurten. Ferner können die Längsprofile auch in der Seitenwandstruktur längslaufende Profile, wie Mittelgurten bzw. Brüstungsgurten sein.

Die Gurtprofile, insbesondere die Dach- und Bodengurtprofile, sind vorzugsweise über die gesamte Wagenkasten- bzw. Fahrzeuglänge durchgehend d.h. unterbruchlos ausgebildet.

Die genannten Gurtprofile, insbesondere die Mittelgurtprofile, können jedoch fallweise durch eine oder mehrere Türöffnungen in der Seitenwandstruktur unterbrochen sein. In diesem Falle sind die Gurtprofile vorzugsweise wenigstens zwischen den Türöffnungen durchgehend ausgebildet.

Die Gurtprofile können Anbindungsstellen, insbesondere in Form von hinterschnittenen Längsnuten zur Befestigung von Innenausbauelementen, wie Beleuchtungskörper, Kabelstränge, Verrohrungen, Luftkanälen, Abdeckungen oder zur Befestigung von Sitzgestellen oder Fahrzeugkomponenten enthalten. Ferner können die Dach-, Boden- bzw. Sockelgurten linienförmige Anschlussstellen zur Anbindung von Dach- bzw. Bodenstrukturen enthalten.

Die Gurtprofile weisen bevorzugt eine über ihre Längsrichtung, insbesondere über ihre Verbindungsstelle, hinweg uniforme Querschnittsstruktur aus. Die Gurtprofile enthalten in eingebauten Zustand an ihren mit den Vertikalprofilen kreuzenden Verbindungsstellen vorzugsweise keine Ausfräsungen und dergleichen.

Dach- und/oder Boden- bzw. Sockelgurten können in Weiterbildung der Erfindung als querschnittlich winkelartige Längsprofile bzw. als Längsprofile mit zwei in einem Winkel, insbesondere einem rechten Winkel, zueinander stehenden Profilschenkeln ausgebildet sein. Ein erster Profilschenkel ist hierzu bevorzugt vertikal und ein zweiter Profilschenkel horizontal angeordnet, wobei die beiden Profilschenkel aussenseitig eine, vorzugsweise rechtwinklige, Aussparung zur Aufnahme des Endabschnittes eines oder mehrere Vertikalprofile ausbilden. In besonders bevorzugter Weiterbildung der Erfindung bildet das vorgenannte winkelartige Längsprofil eine aussenseitig angeordnete mit der aussenseitigen Seitenfläche des oder der Vertikalprofile gemeinsam fluchtende Seitenfläche aus. Die genannte Seitenfläche liegt zweckmässig am horizontalen Profilschenkel.

Die erfindungsgemässen, kreuzartige Verbindungsstellen liegen vorzugsweise zwischen Brüstungsgurten und Seitenwand- bzw. Fenstersäulen, zwischen Dachgurten und Fenstersäulen bzw. Türpfosten sowie zwischen Bodengurten und Seitenwandsäulen bzw. Türpfosten.

In bevorzugter Ausgestaltung der Erfindung enthält die Seitenwandstruktur Profilgurten in der Ausführung eines Boden- oder Sockelgurtes, eines Mittel- oder Brüstungsgurtes, sowie eines Dachgurtes. Quer zu diesen Gurtprofilen sind Seitenwandsäulen und Fenstersäulen sowie sowie Türpfosten vorgesehen. Die kreuzartigen Verbindung zwischen Mittel- bzw. Brüstungsgurt und den Seitenwandsäulen bzw. Fenstersäulen zeichnen sich dadurch aus, dass der Mittel- bzw. Brüstungsgurt wenigstens eine, zwei oder mehrere hinterschnittene Längsnuten aufweist und als durchgehendes Längsprofil ausgestaltet ist, welches lediglich durch Türöffnungen unterbrochen ist. Der Mittel- bzw. Brüstungsgurt hinterquert die Seitenwand- bzw. Fenstersäulen wenigstens teilweise oder vollständig, wobei wenigstens eine, zwei oder mehrere hinterschnittene Längsnuten die Seitenwand- bzw. Fenstersäulen hinterqueren. Der Mittel- bzw. Brüstungsgurt ist vorzugsweise als Flachprofil ausgebildet, d.h. die Profilbreite entspricht wenigstens der doppelten Profilhöhe. Ferner kann der Mittel- oder Brüstungsgurt als T-förmiges Hohlprofil mit einem zentralen, erhöhten Profilabschnitt und beidseitigen Längsnuten enthaltenden Profilflanken ausgebildet sein.

Die Seitenwand- bzw. Fenstersäulen können als im Bereich der genannten Verbindungsstelle durchgehende oder unterbrochene Vertikalprofile ausgebildet sein, wobei im ersten Fall der Mittel- bzw. Brüstungsgurt die Seitenwand- bzw. Fenstersäulen vollständig und im zweiten Fall teilweise hinterqueren.

Sind sowohl die Vertikalprofile als auch die die Vertikalprofile hinterquerenden Längsprofile an den kreuzartigen Verbindungsstellen durchgehend ausgebildet, so sind die Längsprofile mit ihrer aussenseitigen Längsseite nach innen versetzt angeordnet, wodurch keine gemeinsame aussenseitige Flucht begründet wird. Aus diesem Grunde sind an der aussenseitigen Seitenfläche des oder der Längsprofile vorzugsweise profilartige Aufsatzelemente angebracht. Diese bezwecken in erster Linie die Ausbildung einer gemeinsamen aussenseitigen Flucht der Seitenwandstruktur. Die Aufsatzelemente sind in ihrer Höhe, so bemessen, dass ihre aussenseitigen Seitenfläche mit jenen der Vertikalprofile gemeinsam fluchten. Die Aufsatzelemente sind beispielsweise immer zwischen zwei Vertikalprofilen liegend angeordnet. Die Aufsatzelemente finden insbesondere bei den Mittel- bzw. Brüstungsgurten und gegebenenfalls bei Dach- oder Boden- bzw. Sockelgurten Anwendung. Die Aufsatzelemente können ferner zur Versteifung der Längsprofile beitragen.

Das Aufsatzelement ist vorzugsweise mittels dieses durchsetzenden Schrauben am Längsprofil festgesetzt, wobei die Schrauben in die Gewindebohrungen von Einlageteilen eingreifen, welche in eine oder mehrere parallele, hinterschnittene Längsnuten des Längsprofils eingebracht sind. Das Aufsatzelement kann jedoch auch mittels anderen Verbindungstechniken wie Schweissen, Nieten, Einklinken oder Kleben an das Längsprofil angebracht sein. Das Aufsatzelement kann in weiterer Ausführung der Erfindung zugleich Eckverbindungselement zwischen dem Längs- und Vertikalprofil sein.

In besonderer Ausgestaltung der Erfindung enthält das profilartige Aufsatzelement Anschlussstellen, insbesondere nutförmige Anschlussstellen, zur Aufnahme von Aussenverkleidungselementen, insbesondere zur Befestigung von Scheibenelementen bzw. von die Scheibenelemente aufnehmenden Gummidichtungen und/oder Abdeckelementen. Die genannten Anschlussstellen können als Nuten, insbesondere hinterschnittene Nuten, ausgebildet sein, welche geeignet sind, besagte Befestigungselemente durch Einschieben oder Einklinken aufzunehmen. Ferner kann das Aufsatzelement Anschlussstellen für Formschlussverbindungen wie z.B. Clip- oder Steckverbindungen aufweisen.

Das profilartige Aufsatzelement ist vorzugsweise aus Metall, wie Eisen oder Stahl und insbesondere aus einem Leichtmetall, wie Aluminium und seine Legierungen. Besonders geeignet sind Strangpressprofile aus einem Leichtmetall, insbesondere aus Aluminium oder einer Aluminiumlegierung. Das profilartige Aufsatzelement kann jedoch auch aus Kunststoff, insbesondere aus faserverstärktem, wie glas- oder kohlefaserverstärktem Kunststoff bestehen.

Das Aufsatzelement kann aus einem Vollprofil, offenen Profil, halboffenen Profil oder geschlossenem Profil, wie Ein- oder Mehrkammerhohlprofil sein.

Erfindungsgemässe Wagenkastenkonstruktion findet insbesondere Anwendung für Busse, wie Omnibusse, und beispielsweise Niederflurbusse. Die Wagenkastenkonstruktion eignet sich sowohl für Überlandbusse, wie z.B. Reisebusse, als auch für Stadtbusse, z.B. für den öffentlichen Nahverkehr.

Im folgenden wird die Erfindung beispielhaft und mit Bezug auf die beiliegenden Zeichnungen näher erläutert. Es zeigen:
- Fig. 1a:: Querschnitt durch die Verbindungsstelle zwischen Vertikalpfosten und Dachgurt entlang der Linie B - B einer erfindungsgemässen Seitenwandstruktur gemäss Fig. 1b;
- Fig. 1b:: Seitenansicht einer Verbindungsstelle zwischen Vertikalpfosten und Dachgurt;
- Fig. 2a:: Querschnitt durch die Verbindungsstelle zwischen Vertikalpfosten und Mittelgurt entlang der Linie C - C einer erfindungsgemässen Seitenwandstruktur gemäss Fig. 2b;
- Fig. 2b:: Seitenansicht einer Verbindungsstelle zwischen Vertikalpfosten und Mittelgurt;
- Fig. 3a:: Querschnitt durch die Verbindungsstelle zwischen Vertikalpfosten und Bodengurt bzw. Sockelgurt entlang der Linie D - D einer erfindungsgemässen Seitenwandstruktur gemäss Fig. 3b;
- Fig. 3b:: Seitenansicht einer Verbindungsstelle zwischen Vertikalpfosten und Bodengurt bzw. Sockelgurt;
- Fig. 4:: Beispielhafter Querschnitt eines Vertikalpfostens entlang der Linie A - A gemäss Fig. 1, 2 und 3;
- Fig. 5a:: Querschnitt durch die Verbindungsstelle zwischen Vertikalpfosten und Dachgurt entlang der Linie F - F einer weiteren erfindungsgemässen Seitenwandstruktur gemäss Fig. 5b;
- Fig. 5b:: Seitenansicht einer Verbindungsstelle zwischen Vertikalpfosten und Dachgurt;
- Fig. 6a:: Querschnitt durch die Verbindungsstelle zwischen Vertikalpfosten und Mittelgurt entlang der Linie G - G einer weiteren erfindungsgemässen Seitenwandstruktur gemäss Fig. 6b;
- Fig. 6b:: Seitenansicht einer Verbindungsstelle zwischen Vertikalpfosten und Mittelgurt;
- Fig. 7a:: Querschnitt durch die Verbindungsstelle zwischen Vertikalpfosten und Bodengurt bzw. Sockelgurt entlang der Linie H - H einer weiteren erfindungsgemässen Seitenwandstruktur gemäss Fig. 7b;
- Fig. 7b:: Seitenansicht einer Verbindungsstelle zwischen Vertikalpfosten und Bodengurt bzw. Sockelgurt;
- Fig. 8:: Beispielhafter Querschnitt eines Vertikalpfostens entlang der Linie E - E gemäss Fig. 5, 6 und 7;
- Fig. 9a:: Aufsicht eines Einlageteils;
- Fig. 9b:: Seitenansicht eines Einlageteils;
- Fig. 10:: Querschnitt durch eine beispielhafte Schraubverbindung mit Einlageteil;
- Fig. 11:: Perspektivische Ansicht einer Verbindung zwischen Vertikalprofil und Längsprofil mit Eckverbindungselementen.

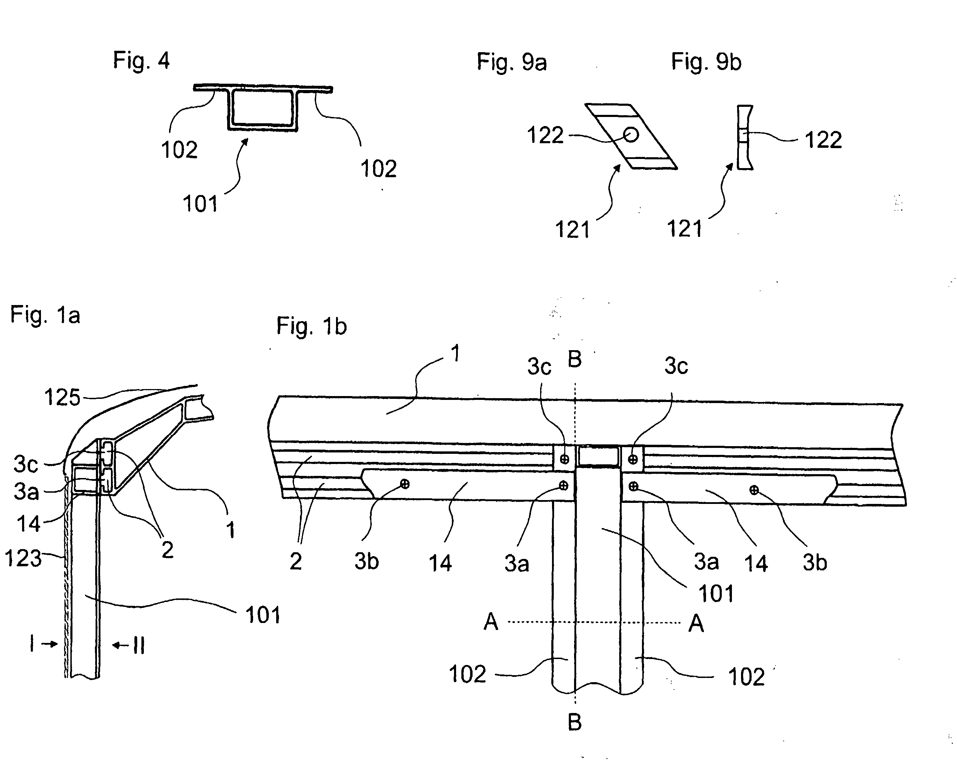

Die Fig. 1a, 2a, 3a, 5a, 6a und 7a zeigen Ausschnitte aus erfindungsgemässen Seitenwandstrukturen in Querschnittsansicht, wobei die Querschnittsebenen senkrecht zur Seitenwandebene angeordnet sind. Mit I ist jeweils die Wagenkastenaussenseite (Aussenseite) und mit II die Wagenkasteninnenseite (Innenseite) gekennzeichnet. Die Fig. 1b, 2b, 3b, 5b, 6b und 7b zeigen die dazugehörigen Ausschnitte aus erfindungsgemässen Seitenwandstrukturen in Seitenansicht, wobei die Seitenansicht von der Aussenseite auf die Seitenwandebene in Richtung Innenseite erfolgt.

Die in den Fig. 1, 2, 3, 5, 6 und 7 gezeigten und nachfolgend beschriebenen Schraubverbindungen sind der Übersicht halber lediglich schematisch dargestellt.

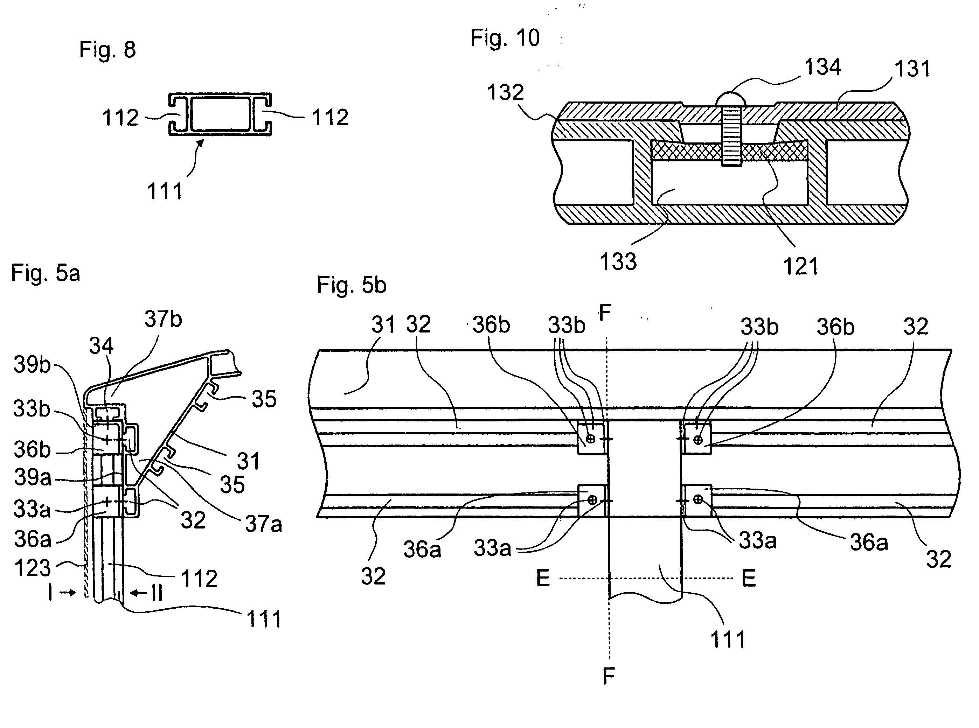

Fig. 1a und 1b zeigen die Verbindungsstelle zwischen einem Vertikalpfosten 101 und einem Dachgurt 1 gemäss einer ersten erfindungsgemässen Ausführungsart. Der Dachgurt 1 enthält zwei aussenseitig parallel zueinander angeordnete, hinterschnittene Längsnuten 2, mit welchen der Dachgurt 1 den Vertikalpfosten 101 hinterquert. Die Längsnuten 2 liegen der innenseitigen Seitenfläche des Vertikalpfostens 101 an. Der Vertikalpfosten 101 ist als ein zwei seitliche Profilflanken 102 enthaltendes Profil ausgebildet (vgl. Fig. 4 und dazu gehörige Beschreibung), wobei der Vertikalpfosten 101 mittels Schraubverbindungen 3a,c an den Dachgurt 1 festgelegt ist. An der bodenwärtigen Längsnut 2 ist der Vertikalpfosten 101 über Aufsatzelemente 14 an den Dachgurt 1 festgelegt. Die Aufsatzelemente 14 verlaufen jeweils zwischen zwei Vertikalpfosten 101 und sind mittels Schraubverbindungen 3b am Dachgurt 1 festgelegt. Die aussenseitige Seitenfläche der Aufsatzelemente 14 und der Vertikalpfosten 101 bilden eine gemeinsame Flucht aus.

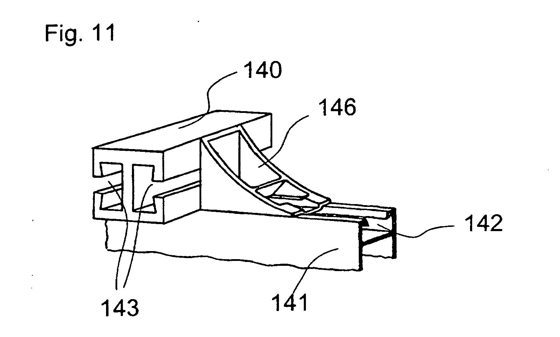

Die vorgenannten Schraubverbindungen 3a,b,c enthalten die Aufsatzelemente 14 und/oder die Profilflanken 102 durchstossende Schrauben, welche in die Gewindebohrung von in die Längsnuten 2 eingebrachten Einlageteilen 121 eingeschraubt sind (vgl. Fig. 9, 10 und dazu gehörige Beschreibung).

Der Seitenwandbereich gemäss Fig. 1a enthält aussenseitig dachwärtige Verkleidungselemente 125 und Scheibenelemente 123, welche über die Aufsatzelemente 14 an der Aussenwand befestigt sind.

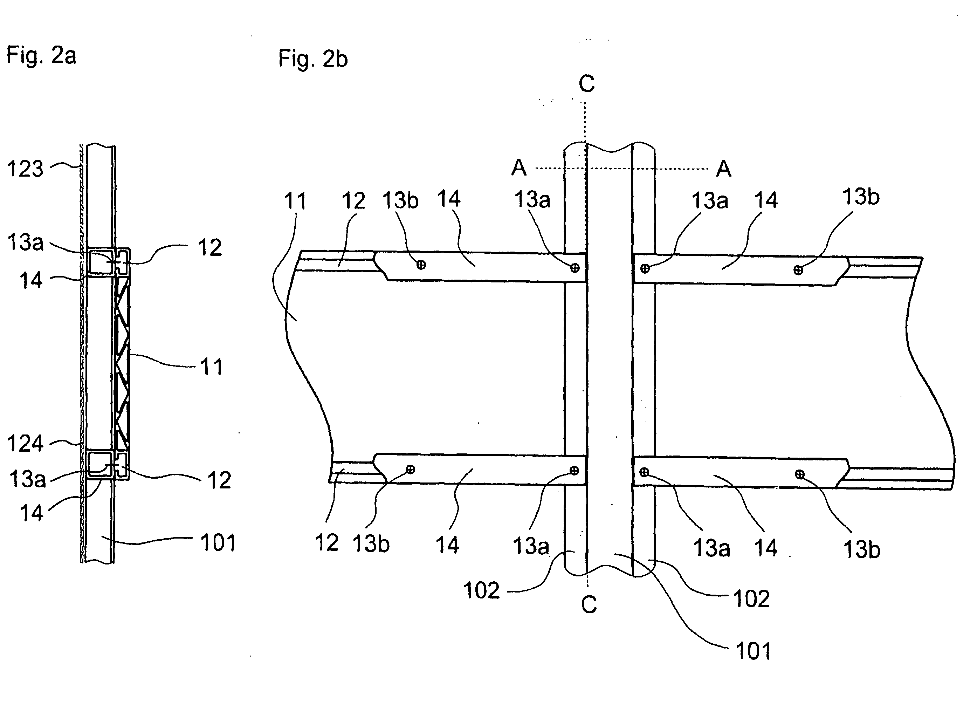

Fig. 2a und 2b zeigen die Verbindungsstelle zwischen einem Vertikalpfosten 101 und einem Mittelgurt 11 gemäss einer ersten erfindungsgemässen Ausführungsart. Der Mittelgurt 11 enthält zwei aussenseitig, peripher angeordnete hinterschnittene Längsnuten 12 und hinterquert den Vertikalpfosten 101 vollständig. Die Längsnuten 12 liegen der innenseitigen Seitenfläche des Vertikalpfostens 101 an. Der Vertikalpfosten 101 ist als ein zwei seitliche Profilflanken 102 enthaltendes Profil ausgebildet (vgl. Fig. 4 und dazu gehörige Beschreibung). Der Vertikalpfosten 101 ist über Aufsatzelemente 14 mittels Schraubverbindungen 13a an den Mittelgurt 11 festgelegt.

Die Aufsatzelemente 14 verlaufen jeweils zwischen zwei Vertikalpfosten 101 und sind mittels Schraubverbindungen 3b am Mittelgurt 11 festgelegt. Die aussenseitige Seitenfläche der Aufsatzelemente 14 und der Vertikalpfosten 101 bilden eine gemeinsame Flucht aus.

Die Schraubverbindungen 13a,b enthalten die Aufsatzelemente 14 bzw. die Aufsatzelemente 14 und Profilflanken 102 durchstossende Schrauben, welche in die Gewindebohrung von in die Längsnuten 12 eingebrachten Einlageteilen 121 eingeschraubt sind (vgl. Fig. 9, 10 und dazu gehörige Beschreibung).

Der Seitenwandbereich gemäss Fig. 2a enthält aussenseitig Scheibenelemente 123, welche sich über den oberen Seitenwandabschnitt erstrecken und im Bereich des Mittelgurtes 11 enden und von nachfolgenden Verkleidungselementen 124 abgelöst werden. Die Scheiben-123 und Verkleidungselemente 124 sind über die Aufsatzelemente 14 an der Aussenwand befestigt.

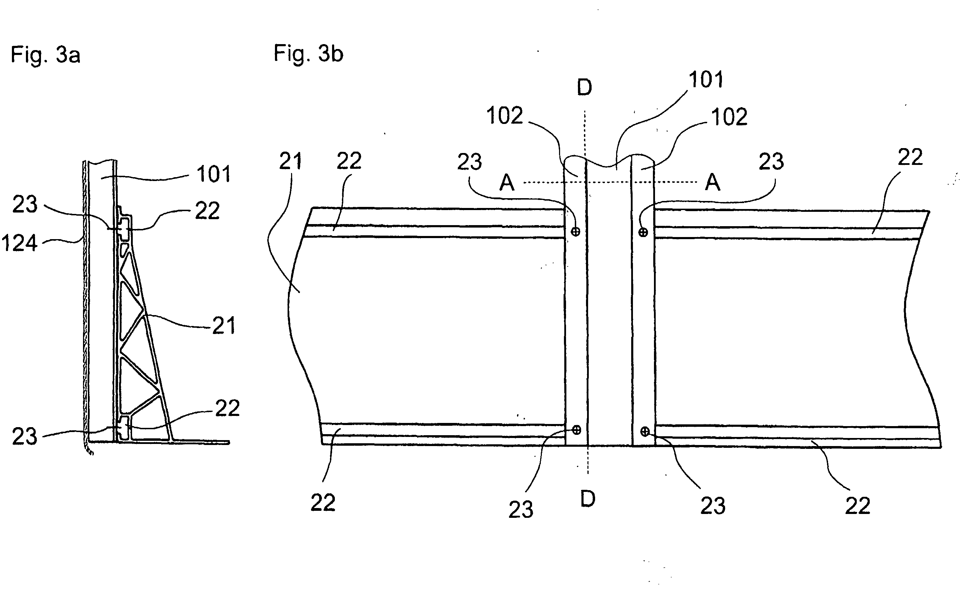

Fig. 3a und 3b zeigen die Verbindungsstelle zwischen einem Vertikalpfosten 101 und einem Bodengurt 21 gemäss einer ersten erfindungsgemässen Ausführungsart. Der Bodengurt 21 enthält zwei aussenseitig, peripher angeordnete hinterschnittene Längsnuten 22 und hinterquert mit diesen den Vertikalpfosten 101. Die Längsnuten 22 liegen der innenseitigen Seitenfläche des Vertikalpfostens 101 an. Der Vertikalpfosten 101 ist als ein zwei seitliche Profilflanken 102 enthaltendes Profil ausgebildet (vgl. Fig. 4 und dazu gehörige Beschreibung). Der Vertikalpfosten 101 ist mittels die Profilflanken 102 durchstossenden Schraubverbindungen 23 an den Bodengurt 21 festgelegt.

Der Vertikalpfosten 101 kann auch analog zu Fig. 1 und 2 über Aufsatzelemente am Bodengurt festgelegt sein. Umgekehrt können die Vertikalprofile gemäss Fig. 1 und 2 analog zu Fig. 3 direkt über ihre Profilflanken 102 am Längsprofil festgelegt sein.

Die Schraubverbindungen 23 enthalten die Profilflanken 102 durchstossende Schrauben, welche in die Gewindebohrung von in die Längsnuten 22 eingebrachten Einlageteilen 121 eingeschraubt sind (vgl. Fig. 9, 10 und dazu gehörige Beschreibung).

Der Seitenwandbereich gemäss Fig. 3a enthält aussenseitig Verkleidungselemente 124. Die Verkleidungselemente 124 können über Aufsatzelemente an der Aussenwand befestigt sein.

Der Vertikalpfosten 101 kann, wie in Fig. 4 dargestellt, als Hohlprofil oder als offenes Profil, wie Hut- bzw. Omega-förmiges Profil, ausgebildet sein. Der Vertikalpfosten enthält, vorzugsweise zwei, in derselben Ebene liegende seitliche Profilflanken bzw. Längsleisten 102. Die Profilflanken 102 sind beispielsweise in Verbreiterung der innenseitigen Seitenfläche ausgebildet und liegen parallel zur Seitenwandebene. Der Vertikalpfosten 101 ist beispielsweise aus einem Aluminiumstrangpressprofil oder aus einem umgeformten Blech hergestellt.

Der Vertikalpfosten 111 ist in einer weiteren Ausführungsvariante gemäss Fig. 8 als Hohlprofil ausgebildet, wobei seine quer zur Seitenwandebene liegenden Seitenquerflächen je eine hinterschnittene Längsnut 112 enthalten.

Fig. 5a und 5b zeigen die Verbindungsstelle zwischen einem Vertikalpfosten 111 und einem Dachgurt 31 gemäss einer zweiten erfindungsgemässen Ausführungsart. Der Dachgurt 31 enthält ein erster, vorzugsweise verlängerter Schenkel 37a, welcher mit seiner aussenseitigen Seitenfläche 39a vertikal bzw. parallel zum Vertikalpfosten 111 verlaufend angeordnet ist. Ein zweiter vorzugsweise verkürzter Schenkel 37b ist aussenseitig und seine zum Vertikalpfosten 111 weisende Seitenfläche 39b horizontal bzw. senkrecht zum Vertikalpfosten 111, d.h. parallel zur Stirnfläche des Vertikalpfostens 111 verlaufend, angeordnet, wobei die durch die beiden Schenkel 37a, 37b gebildete winkelförmige Aussparung zur Aufnahme des bzw. der Vertikalpfosten 111 vorgesehen ist. Der Dachgurt 31 enthält zwei peripher in der aussenseitigen Seitenfläche 39a angeordnete hinterschnittene Längsnuten 32. Der Dachgurt 31 enthält ferner eine in der zum Vertikalpfosten 111 weisenden Seitenfläche 39b des zweiten Schenkels 37b angeordnete hinterschnittene Längsnut 34.

Der erste Schenkel 37a hinterquert den Vertikalpfosten 111 vollständig. Die Seitenfläche 39a liegt mit ihren Längsnuten 32 der innenseitigen Seitenfläche und die Seitenfläche 39b mit ihrer Längsnut 34 der Stirnseite des Vertikalpfostens 111 an.

Der Vertikalpfosten 111 ist als Hohlprofil ausgebildet (vgl. Fig. 8 und dazugehörige Beschreibung) und enthält an seinen beiden quer zur Seitenwandebene verlaufenden Seitenquerflächen je eine hinterschnittene Längsnut 112.

Der Vertikalpfosten 111 ist mittels Eckverbindungselemente 36 enthaltenden Schraubverbindungen 33 an den Dachgurt 31 festgelegt. Im bodenwärtigen Bereich der Verbindungsstelle sind beidseitig des Profilpfostens 111 Schraubverbindungen 33a angeordnet. Die dazugehörigen Eckverbindungselemente 36a sind in der Längsnut 32 des ersten Schenkels 37a und in der Längsnut 112 des Vertikalpfostens 111 fixiert. Die Fixierung geschieht durch jeweils das Eckverbindungselement 36a durchstossende Schrauben, welche in die Gewindebohrung von in die Längsnuten 32, 112 eingebrachten Einlageteile 121 eingeschraubt sind (vgl. Fig. 11 und die dazugehörige Beschreibung).

Im dachwärtigen Bereich der Verbindungsstelle sind beidseitig des Profilspfostens 111 Schraubverbindungen 33b angeordnet. Die dazugehörigen Eckverbindungselemente 36b sind sowohl in den Längsnuten 32, 112 des ersten Schenkels 37a und des Vertikalpfostens 111 als auch in der Längsnute 34 des zweiten Schenkels 37b fixiert. Die Fixierung geschieht durch jeweils das Eckverbindungselement 36b durchstossende Schrauben, welche in die Gewindebohrung von in die Längsnuten 32, 112, 34 eingebrachten Einlageteile 121 eingeschraubt sind.

Die beiden dachwärtigen Eckverbindungselemente 36b können jedoch auch lediglich in den Längsnuten 32, 112 des ersten Schenkels 37a und des Vertikalpfostens 111 verankert sein.

Die Dachgurte 31 kann ferner weitere, innenseitig angeordnete hinterschnittene Längsnuten 35 zur Anbindung weiterer Strukturen enthalten.

Der Seitenwandbereich gemäss Fig. 5a enthält aussenseitig dachwärtige Scheibenelemente 123, welche an der Aussenwand befestigt sind.

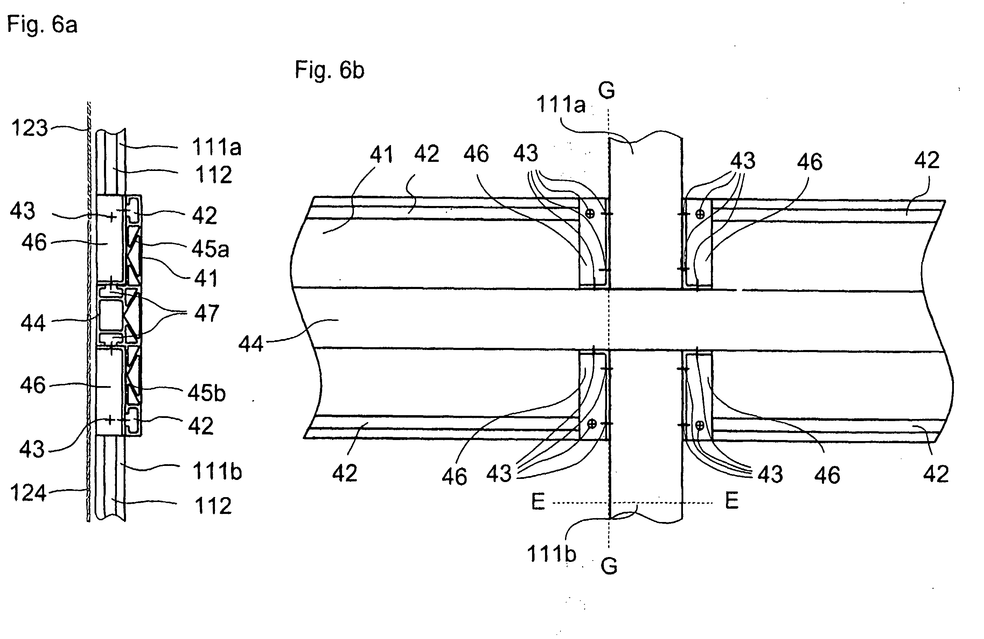

Fig. 6a und 6b zeigen die Verbindungsstelle zwischen einem Vertikalpfosten 111 und einem Mittelgurt 41 gemäss einer zweiten erfindungsgemässen Ausführungsart. Der Mittelgurt 41 ist T-förmig ausgebildet und enthält einen zentralen, erhöhten, kastenförmigen Profilteil 44 und zwei seitliche Profilflanken 45a, 45b mit zum Wagenkasteninneren zurückversetzten aussenseitigen Seitenflächen. Der Mittelgurt 41 bildet einheitlich fluchtende innenseitige Seitenfläche aus.

Die aussenseitige Seitenfläche des erhöhten Profilteils 44 und des Vertikalpfostens 111 fluchten gemeinsam. In der aussenseitigen Seitenfläche der Profilflanken 45a, 45b ist je eine hinterschnittene Längsnut 42 angeordnet.

Der Vertikalpfosten 111 ist in zwei Profilteile 111a, 111b geteilt, wobei der Mittelgurt 41 mit seinem zentralen Profilteil 44 zwischen den beiden Profilteilen 111a, 111b hindurch führt und die beiden Profilteile 111a, 111b mit ihren endseitigen Stirnflächen seitlich an den zentralen Profilteil 44 anstossen. Der Mittelgurt 41 hinterquert mit seinen beiden Profilflanken 45a, 45b und den dazugehörigen Längsnuten 42 die innenseitige Seitenfläche der beiden Profilteile 111a, 111b, wodurch die Längsnuten 42 an die innenseitige Seitenfläche der Profilteile 111a, 111b zu liegen kommen.

Der Vertikalpfosten 111 bzw. die Profilteile 111a, 111b sind als Hohlprofile ausgebildet (vgl. Fig. 8 und dazu gehörige Beschreibung) und enthalten an ihren beiden quer zur Seitenwandebene verlaufenden Seitenquerflächen je eine hinterschnittene Längsnut 112.

Die Profilteile 111a, 111b sind mittels Eckverbindungselemente 46 enthaltenden Schraubverbindungen 43 an den Mittelgurt 41 festgelegt. Die beidseitig der Profilteile 111a, 111b angeordneten Eckverbindungselemente 46 sind jeweils sowohl in einer Längsnut 42, 112 einer Profilflanke 45a, 45b und des Profilteils 111a, 111b als auch in der Längsnut 47 des zentralen Profilteils 44 fixiert. Die Fixierung geschieht durch jeweils das Eckverbindungselement 46 durchstossende Schrauben, welche in die Gewindebohrung von in die Längsnuten 42, 112, 47 eingebrachten Einlageteile 121 eingeschraubt sind.

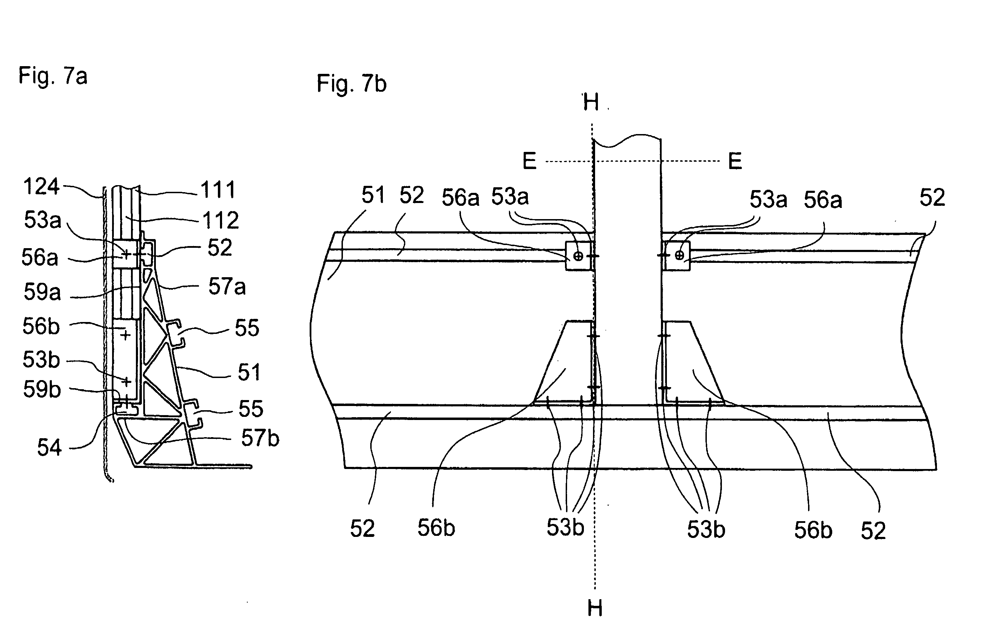

Fig. 7a und 7b zeigen die Verbindungsstelle zwischen einem Vertikalpfosten 111 und einem Bodengurt 51 gemäss einer zweiten erfindungsgemässen Ausführungsart. Der Bodengurt 51 enthält ein erster, vorzugsweise verlängerter Schenkel 57a, welcher mit seiner aussenseitigen Seitenfläche 59a vertikal bzw. parallel zum Vertikalpfosten 111 verlaufend angeordnet ist. Ein zweiter vorzugsweise verkürzter Schenkel 57b ist aussenseitig und seine zum Vertikalpfosten 111 weisende Seitenfläche 59b horizontal bzw. senkrecht zum Vertikalpfosten 111 angeordnet, wobei die durch die beiden Schenkel 57a, 57b gebildete Aussparung zur Aufnahme des bzw. der Vertikalpfosten 111 vorgesehen ist. Der Bodengurt 51 enthält eine in der aussenseitigen Seitenfläche 59a des ersten Schenkels 57a im dachwärtigen Bereich der Verbindungsstelle angeordnete hinterschnittene Längsnut 52 und hinterquert mit der aussenseitigen Seitenfläche 59a den Vertikalpfosten 111 vollständig. Die aussenseitige Seitenfläche 59a kann auch zwei hinterschnittene Längsnuten 52 aufweisen. Der Bodengurt 51 enthält ferner eine in der zum Vertikalpfosten 111 weisenden Seitenfläche 59b des zweiten Schenkels 57b angeordnete hinterschnittene Längsnut 54.

Die Seitenfläche 59a liegt mit ihrer Längsnut 52 der innenseitigen Seitenfläche und die Seitenfläche 59b mit ihrer Längsnut 54 der Stirnseite des Vertikalpfostens 111 an. Der Vertikalpfosten 111 ist als Hohlprofil ausgebildet (vgl. Fig. 8 und dazu gehörige Beschreibung) und enthält an seinen beiden quer zur Seitenwandebene verlaufenden Seitenquerflächen je eine hinterschnittene Längsnut 112.

Der Vertikalpfosten 111 ist mittels Eckverbindungselemente 56 enthaltenden Schraubverbindungen 53 an den Bodengurt 51 festgelegt. Im dachwärtigen Bereich der Verbindungsstelle sind beidseitig des Vertikalpfostens 111 Schraubverbindungen 53a angeordnet. Die dazugehörigen Eckverbindungselemente 56a sind in der Längsnut 52 des ersten Schenkels 57a und in der Längsnute 112 des Vertikalpfostens 111 fixiert. Die Fixierung geschieht durch jeweils das Eckverbindungselement 56a durchstossende Schrauben, welche in die Gewindebohrung von in die Längsnuten 52, 112 eingebrachten Einlageteile 121 eingeschraubt sind (vgl. Fig. 11 und die dazugehörige Beschreibung).

Im bodenwärtigen Bereich der Verbindungsstelle sind Schraubverbindungen 53b angeordnet. Die dazugehörigen Eckverbindungselemente 56b sind in der Längsnut 112 des Vertikalpfostens 111 und in der Längsnut 54 des zweiten Schenkels 57b fixiert. Die Fixierung geschieht durch jeweils das Eckverbindungselement 56b durchstossende Schrauben, welche in die Gewindebohrung von in die Längsnuten 112, 54 eingebrachten Einlageteile 121 eingeschraubt sind. Das Eckverbindungselement 56b ist hier deshalb in einer zur Seitenwandebene parallelen Ebene angeordnet.

Enthält der erste Schenkel 57a eine im bodenwärtigen Bereich der Verbindungsstelle angeordnete und parallel zur Längsnut 52 verlaufende zweite hinterschnittene Längsnut (nicht gezeigt), so können die Eckverbindungselemente 56b sowohl in den Längsnuten 54, 112 des zweiten Schenkels 57b und des Vertikalpfostens 112 als auch in der zusätzlichen zweiten Längsnut fixiert sein.

Die genannten Schraubverbindungen 53 enthalten das Eckverbindungselement 56 durchstossende Schrauben, welche in die Gewindebohrung von in die hinterschnittene Längsnuten 52, 54, 112 eingebrachten Einlageteilen 121 eingeschraubt sind.

In bevorzugter Ausführung erfolgt die kreuzende Verbindung der Längs- und Vertikalprofile im Dachbereich, Mittelabschnitt sowie im Bodenbereich der Seitenwandsstruktur gemäss den Figuren 1, 2, und 3 und der dazugehörigen Beschreibung. In weiterer bevorzugter Ausführung erfolgt die kreuzende Verbindung der Längs- und Vertikalprofile im Dachbereich, Mittelabschnitt sowie im Bodenbereich der Seitenwandsstruktur gemäss den Figuren 4, 5 und 6 und der dazugehörigen Beschreibung. Die Seitenwandstruktur kann jedoch auch nur einzelne der in den Figuren 1-6 beschriebenen, kreuzenden Profilanordnungen bzw. Profilverbindungen enthalten.

Fig. 9 zeigt eine bevorzugte Ausführung des Einlageteils 121 einer Schraubverbindung gemäss den Ausführungsbeispielen von Fig. 1, 2, 3, 5, 6 und 7 in Draufsicht (Fig. 9a) und Querschnittsansicht (Fig. 9b). Das Einlageteil 121 ist als parallelogrammartiges Plättchen mit einer zentral angeordneten Gewindebohrung 122 ausgebildet. Zur Erstellung der Schraubverbindung wird die das erste Verbindungsteil 131, d.h. den Vertikalpfosten oder ein Verbindungselement, durchsetzende Schraube 134 in die Gewindebohrung 122 des Einlageteils 121 geschraubt. Das Einlageteil 121 wird mit seiner Längsseite in die hinterschnittene Längsnut 133 des zweiten Verbindungsteils 132, d.h. des Längs- bzw. Gurtprofils, eingeführt. Durch weiteres Schrauben schwenkt das eingeführte Einlageteil 121 mit seinen kurzen Seiten in die Hinterschneidung der Längsnut 133 ein. Die Schraube 134 kann nun unter Ausbildung einer festen Schraubverbindung weiter in die Gewindebohrung 122 des nun in der Längsnut 133 festsitzenden und verankerten Einlageteils 121 eingedreht werden (Fig. 10).

Fig. 11 zeigt beispielhaft die Ausführung einer Verbindungsstruktur zwischen einem Vertikalpfosten und Längsprofil mittels Eckverbindungselement, wie sie beispielsweise in Fig. 5 und 7 mit den Schraubverbindungen 33a, 53a ausgeführt ist. Der Vertikalpfosten 140 wird von einem Längsprofil 141 mit hinterschnittener Längsnut 142 vollständig hinterquert. Der Vertikalpfosten 140 enthält in den quer zur Seitenwandebene verlaufenden Seitenflächen je eine hinterschnittene Längsnut 143. Ein Eckverbindungselement 146 liegt mit je einer Seitenfläche der aussenseitigen Seitenfläche des Längsprofils 141 und der Seitenquerfläche des Vertikalpfostens 140 an. Schrauben durchsetzen das Eckverbindungselement 146 und die Einlageteile in den beiden Längsnuten 142, 143 und verbinden auf diese Weise den Vertikalpfosten 140 mit dem Längsprofil 141.

## Patentansprüche

1. Gerippe einer Wagenkastenkonstruktion, insbesondere für Strassen- oder Schienenfahrzeuge zur Personenbeförderung, mit einer Seitenwandstruktur, enthaltend eine zum Wagenkasteninneren gerichtete Innenseite und eine gegen aussen gerichtete Aussenseite sowie kreuzartige Verbindungsstellen ausbildende Längs- (1, 11, 21, 31, 41, 51, 141) und Vertikalprofile (101, 111, 140), wobei die Längsprofile Gurtprofile und die Vertikalprofile Seitenwandsäulen, Fensterpfosten und/oder Türpfosten sind, wobei sich Längs- und Vertikalprofile in einem Winkel um 90° kreuzen, wobei
an einer, mehreren oder allen kreuzartigen Verbindungsstellen zwischen Längs- (1, 11, 21, 31, 41, 51, 141, ) und Vertikalprofil (101, 111, 140) das Längsprofil durchgängig und mit einer über die kreuzartigen Verbindungsstelle hinweg uniformen Querschnittsstruktur ausgebildet ist und eine in Profillängsrichtung verlaufende hinterschnittene Längsnut (2, 12, 22, 32, 42, 52, 142) enthält, wobei das Vertikalprofil über wenigstens eine Schraubverbindung (3, 13, 23, 33, 43, 53) mit dem Längsprofil lösbar verbunden ist, und die Schraubverbindung durch wenigstens eine das Vertikalprofil oder ein Verbindungselement (36, 46, 56, 146, 131) durchsetzende sowie in die Gewindebohrung (122) eines in die hinterschnittene Längsnut eingebrachten Einlageteils (121) eingreifende und das Einlageteil (121) verankernde Schraube (134) ausgebildet ist, **dadurch gekennzeichnet, dass** wenigstens die hinterschnittene Längsnut des Längsprofils das Vertikalprofil innenseitig hinterquert und der innenseitigen Seitenfläche des Vertikalprofils anliegt.

2. Gerippe einer Wagenkastenkonstruktion nach Anspruch 1, **dadurch gekennzeichnet, dass** das Längsprofil (1, 11, 21, 31, 41) zwei oder mehrere parallel verlaufende, das Vertikalprofil (101, 111, 140) hinterquerende, hinterschnittene Längsnuten (2, 12, 22, 32, 42, 52) zur lösbaren Verbindung mit dem Vertikalprofil enthält.

3. Gerippe einer Wagenkastenkonstruktion nach einem der Ansprüche 1 bis 2, **dadurch gekennzeichnet, dass** die Längs- (1, 11, 21, 31, 41) und Vertikalprofile (101, 111, 140) Strangpressprofile aus einem Leichtmetall, insbesondere aus Aluminium oder einer Aluminiumlegierung sind, und die Längsprofile Dach-, Mittel- und/oder Boden- bzw. Sockelgurten einer Seitenwandstruktur sind.

4. Gerippe einer Wagenkastenkonstruktion nach einem der Ansprüche 1 bis 3, **dadurch gekennzeichnet, dass** das Vertikalprofil (101) in Verbreiterung der innenseitigen Seitenfläche angeordnete und parallel zur Seitenwandebene verlaufende seitliche Profilflanken (102) enthält.

5. Gerippe einer Wagenkastenkonstruktion nach einem der Ansprüche 1 bis 3, **dadurch gekennzeichnet, dass** das Vertikalprofil (111) ein Hohlprofil ist und an seinen quer, vorzugsweise senkrecht zur Seitenwandebene liegenden Seitenquerflächen je eine hinterschnittene, vertikale Längsnut (112) enthält.

6. Gerippe einer Wagenkastenkonstruktion nach Anspruch 5, **dadurch gekennzeichnet, dass** das Vertikalprofil (111, 140) mittels Eckverbindungselementen (36a, 36b; 46; 56a; 146) an das Längsprofil (31, 41, 51, 141) festgelegt ist, wobei Schrauben die Eckverbindungselemente (36a, 36b; 46; 56a; 146) durchsetzen und in die Gewindebohrung (122) von Einlageteilen (121) eingreifen, welche in die hinterschnittenen Längsnuten (32, 42, 52, 142) des Längsprofils und in die hinterschnittenen, vertikalen Längsnuten (112, 143) des Vertikalprofils eingebracht sind.

7. Gerippe einer Wagenkastenkonstruktion nach einem der Ansprüche 1 bis 6, **dadurch gekennzeichnet, dass** das Längsprofil (41) wenigstens zwei parallel zur Seitenwandebene verlaufende und durch eine in Profillängsrichtung verlaufende Abstufung gegeneinander und senkrecht zur Seitenwandebene versetzte aussenseitige Seitenflächen enthält, wobei die zum Wagenkasteninneren versetzte Seitenfläche oder Seitenflächen wenigstens eine hinterschnittene Längsnut (42) enthält oder enthalten und das Vertikalprofil (111a, 111b) hinterquert oder hinterqueren, und die zur Wagenkastenaussenseite versetzte Seitenfläche mit der aussenseitigen Seitenfläche des Vertikalprofils (111a, 111b) fluchtet.

8. Gerippe einer Wagenkastenkonstruktion nach einem der Ansprüche 1 bis 7, **dadurch gekennzeichnet, dass** das Längsprofil (31) ein Dachgurt ist und der Dachgurt (31) einen ersten, vorzugsweise verlängerten Schenkel (37a), und einen zweiten, vorzugsweise verkürzten, aussenseitig angeordneten Schenkel (37b) enthält, und die beiden Schenkel (37a, 37b) eine winkelförmige Aussparung zur Aufnahme des Endabschnittes des Vertikalprofils (111) ausbilden, und der erste Schenkel (37a) und gegebenenfalls der zweite Schenkel (37b) auf ihren zum Vertikalprofil (111) zugewandten Seitenflächen (39a, 39b) wenigstens eine hinterschnittene Längsnut (32, 34) zum Festlegen des Vertikalprofils (111) an den Dachgurt (31) mittels Eckverbindungselementen (36a, 36b) enthalten.

9. Gerippe einer Wagenkastenkonstruktion nach Anspruch 5 und 8, **dadurch gekennzeichnet, dass** das Vertikalprofil (111) über ein oder zwei Eckverbindungselemente (36b) mit dem Dachgurt (31) verbunden ist, und das Eckverbindungselement (36b) sowohl am Vertikalprofil (111) als auch am ersten und zweiten Schenkel (37a, 37b) des Dachgurtes (31) festgelegt ist, wobei Schrauben das Eckverbindungselement (36b) durchsetzen und in die Gewindebohrung (122) von Einlageteilen (121) eingreifen, welche in die hinterschnittene Längsnuten (32, 34) des ersten (37a) und zweiten Schenkels (37b) und in eine hinterschnittene, vertikale Längsnut (112) des Vertikalprofils (111) eingebracht sind.

10. Gerippe einer Wagenkastenkonstruktion nach einem der Ansprüche 1 bis 7, **dadurch gekennzeichnet, dass** das Längsprofil (51) ein Boden- oder Sockelgurt ist und der Boden- oder Sockelgurt (51) einen ersten, vorzugsweise verlängerten Schenkel (57a), und einen zweiten vorzugsweise verkürzten, aussenseitig angeordneten Schenkel (57b) enthält, und die beiden Schenkel (57a, 57b) eine winkelförmige Aussparung zur Aufnahme des Endabschnittes des Vertikalprofils (111) ausbilden, und der erste Schenkel (57a) und gegebenenfalls der zweite Schenkel (57b) auf ihren zum Vertikalprofil (111) zugewandten Seitenflächen (59a, 59b) wenigstens eine hinterschnittene Längsnut (52, 54) zum Festlegen des Vertikalprofils (111) an den Bodengurt (51) mittels Eckverbindungselementen (56a, 56b) enthalten.

11. Gerippe einer Wagenkastenkonstruktion nach Anspruch 5 und 10, **dadurch gekennzeichnet, dass** das Vertikalprofil (111) über ein oder zwei Eckverbindungselemente (56b) mit dem Boden- oder Sockelgurt (51) verbunden ist, und das Eckverbindungselement (56b) sowohl am Vertikalprofil (111) als auch am ersten und zweiten Schenkel (57a, 57b) des Boden- oder Sockelgurtes (51) festgelegt ist, wobei Schrauben das Eckverbindungselement (56b) durchsetzen und in die Gewindebohrung (122) von Einlageteilen (121) eingreifen, welche in die hinterschnittene Längsnuten (52, 54) des ersten (57a) und zweiten Schenkels (57b) und in die hinterschnittene, vertikale Längsnut (112) des Vertikalprofils (111) eingebracht sind.

12. Gerippe einer Wagenkastenkonstruktion nach einem der Ansprüche 1 bis 7, **dadurch gekennzeichnet, dass** das Längsprofil (41) ein Mittelgurt ist und der Mittelgurt (41) T-förmig ausgebildet ist und einen zentralen, erhöhten, kastenförmigen Profilteil (44) und zwei seitliche Profilflanken (45) mit zum Wagenkasteninneren versetzten aussenseitigen Seitenflächen enthalten, wobei in den aussenseitigen Seitenflächen der Profilflanken (45) wenigstens je eine, das Vertikalprofil hinterquerende, hinterschnittene Längsnut (42) zum Festlegen des Vertikalprofils (111) an den Mittelgurt (41) ausgebildet ist und der Vertikalpfosten (111) an der Verbindungsstelle in zwei Profilteile (111a, 111b) geteilt ist, wobei der Mittelgurt (41) mit seinem zentralen Profilteil (44) zwischen den beiden Profilteilen (111a, 111b) hindurch führt und die beiden Profilteile (111a, 111b) mit ihren endseitigen Stirnflächen seitlich an den zentralen Profilteil (44) anstossen und der Mittelgurt (41) mit seinen beiden Profilflanken (45) die Profilteile (111a,111b) hinterquert.

13. Gerippe einer Wagenkastenkonstruktion nach Anspruch 5 und 12, **dadurch gekennzeichnet, dass** das Vertikalprofil (111) über Eckverbindungselemente (46) mit dem Mittelgurt (41) verbunden ist, und die Eckverbindungselemente (46) am Vertikalprofil (111), an den Profilflanken (45) und am zentralen Profilteil festgelegt sind, wobei Schrauben die Eckverbindungselemente (46) durchsetzen und in die Gewindebohrungen (122) von Einlageteilen (121) eingreifen, welche in die hinterschnittenen, vertikalen Längsnuten (112) des Vertikalprofils (111) und in das Vertikalprofil hinterquerende, hinterschnittene Längsnuten (42) der Profilflanken (45) und in hinterschnittene Längsnuten (47) des zentralen Profilteils eingebracht sind.

14. Gerippe einer Wagenkastenkonstruktion nach Anspruch 12, **dadurch gekennzeichnet, dass** die aussenseitigen Seitenflächen des zentralen Profilteils (44) und des Vertikalpfostens (111) gemeinsam fluchten.

15. Gerippe einer Wagenkastenkonstruktion nach einem der Ansprüche 1 bis 6, **dadurch gekennzeichnet, dass** das das Längsprofil (11) kreuzende Vertikalprofil (101) durchgängig ausgebildet ist.

16. Gerippe einer Wagenkastenkonstruktion nach einem der Ansprüche 1 bis 15, **dadurch gekennzeichnet, dass** zwischen zwei Vertikalprofilen (101) an der aussenseitigen Seitenfläche des Längsprofils (11) ein oder mehrere profilartige Aufsatzelemente (14) angebracht sind, wobei die aussenseitigen Seitenflächen der profilartigen Aufsatzelemente (14) und der Vertikalprofile (101) gemeinsam fluchten.

17. Gerippe einer Wagenkastenkonstruktion nach Anspruch 16, **dadurch gekennzeichnet, dass** die profilartigen Aufsatzelemente (46) mittels das Aufsatzelement (46) durchsetzende und in die Gewindebohrung (122) von in die hinterschnittene Längsnut (12) oder Längsnuten des Längsprofils (11) eingebrachten Einlageteile (121) eingreifende Schrauben am Längsprofil (12) festgelegt sind.

18. Gerippe einer Wagenkastenkonstruktion nach einem der Ansprüche 16 bis 17, **dadurch gekennzeichnet, dass** die profilartigen Aufsatzelemente (46) zugleich Eckverbindungselemente sind und das Vertikalprofil (101) wenigstens teilweise über die profilartigen Aufsatzelemente (46) an das Längsprofil (11) festgelegt ist.

19. Gerippe einer Wagenkastenkonstruktion nach einem der Ansprüche 16 bis 18, **dadurch gekennzeichnet, dass** die profilartigen Aufsatzelemente (46) Anschlussstellen, insbesondere nutförmige Anschlussstellen, zur Befestigung von Scheibenelementen (123) und/oder Verkleidungsteilen (124, 125) enthalten.

20. Gerippe einer Wagenkastenkonstruktion nach einem der Ansprüche 1 bis 19, **dadurch gekennzeichnet, dass** das Einlageteil (121) ein als Parallelogramm ausgebildetes und in die hinterschnittene Längsnut (133) einschwenkbares Klemmplättchen ist.

21. Gerippe einer Wagenkastenkonstruktion nach einem der Ansprüche 1 bis 19, **dadurch gekennzeichnet, dass** das Einlageteil als ein in die hinterschnittene Längsnut seitlich einführbares und mehrere Schraubverbindungen aufnehmendes prismatisches Einlageteil, vorzugsweise Einlageleiste, ausgebildet ist.

## Claims

1. Framework of a vehicle body construction, in particular for road or rail vehicles for passenger transport, having a side wall structure comprising an inner face directed towards the interior of the vehicle body and an outer face directed towards the outside, as well as longitudinal sections (1, 11, 21, 31, 41, 51, 141) and vertical sections (101, 111, 140) forming cross joints, wherein the longitudinal sections are chord sections and the vertical sections are side wall columns, window posts and/or door posts, the longitudinal and vertical sections intersect at an angle of approximately 90°, the longitudinal section is continuous at one, more or all of the cross joints between the longitudinal sections (1, 11, 21, 31, 41, 51, 141) and vertical sections (101, 111, 140), has a uniform cross-sectional structure over the cross joint and comprises an undercut longitudinal groove (2, 12, 22, 32, 42, 52, 142) extending in the longitudinal direction of the section, the vertical section is releasably connected to the longitudinal section by means of at least one screw connection (3, 13, 23, 33, 43, 53) and the screw connection is formed by at least one screw (134) passing through the vertical section or a connecting element (36, 46, 56, 146, 131), engaging in the threaded hole (122) in an insert part (121) introduced into the undercut longitudinal groove and anchoring the insert part (121), **characterised in that** at least the undercut longitudinal groove in the longitudinal section crosses behind the vertical section on the inside and bears against the inner side face of the vertical section.

2. Framework of a vehicle body construction according to claim 1, **characterised in that** the longitudinal section (1, 11, 21, 31, 41) comprises two or more parallel undercut longitudinal grooves (2, 12, 22, 32, 42, 52) crossing behind the vertical section (101, 111, 140) for reieasable connection to the vertical section.

3. Framework of a vehicle body construction according to one of claims 1 to 2, **characterised in that** the longitudinal sections (1, 11, 21, 31, 41) and vertical sections (101, 111, 140) are extruded sections made of a light metal, in particular aluminium or an aluminium alloy, and the longitudinal sections are top, central and/or bottom or base chords of a side wall structure.

4. Framework of a vehicle body construction according to one of claims 1 to 3, **characterised in that** the vertical section (101) comprises lateral flanks (102) arranged in such a manner that they widen the inner side face and extending parallel to the side wall plane.

5. Framework of a vehicle body construction according to one of claims 1 to 3, **characterised in that** the vertical section (111) is a hollow section and comprises respective undercut vertical longitudinal grooves (112) on its transverse side faces situated transversely, preferably perpendicularly, to the side wall plane.

6. Framework of a vehicle body construction according to claim 5, **characterised in that** the vertical section (111, 140) is secured to the longitudinal section (31, 41, 51, 141) by means of comer connecting elements (36a, 36b; 46; 56a; 146), screws passing through the comer connecting elements (36a, 36b; 46; 56a; 146) and engaging in the threaded holes (122) in insert parts (121) introduced into the undercut longitudinal grooves (32, 42, 52, 142) in the longitudinal section and into the undercut vertical longitudinal grooves (112,143) in the vertical section.

7. Framework of a vehicle body construction according to one of claims I to 6, **characterised in that** the longitudinal section (41) comprises at least two outer side faces extending parallel to the side wall plane and offset from one another and perpendicularly to the side wall plane by means of a step extending in the longitudinal direction of the section, the side face or side faces offset towards the interior of the vehicle body comprising at least one undercut longitudinal groove (42) and crossing behind the vertical section (111a, 111b) and the side face offset towards the outer face of the vehicle body being aligned with the outer side face of the vertical section (111a, 111b).

8. Framework of a vehicle body construction according to one of claims 1 to 7, **characterised in that** the longitudinal section (31) is a top chord and the top chord (31) comprises a first, preferably extended flange (37a) and a second, preferably shortened outer flange (37b), the two flanges (37a, 37b) form an angular recess for receiving the end portion of the vertical section (111) and the first flange (37a) and possibly the second flange (37b) are provided on their side faces (39a, 39b) directed towards the vertical section (111) with at least one undercut longitudinal groove (32, 34) for securing the vertical section (111) to the top chord (31) by means of comer connecting elements (36a, 36b).

9. Framework of a vehicle body construction according to claims 5 and 8, **characterised in that** the vertical section (111) is connected to the top chord (31) by means of one or two comer connecting elements (36b) and the corner connecting element (36b) is secured both to the vertical section (111) and to the first and second flanges (37a, 37b) of the top chord (31), screws passing through the comer connecting element (36b) and engaging in the threaded holes (122) in insert parts (121) introduced into the undercut longitudinal grooves (32, 34) in the first (37a) and second flanges (37b) and into an undercut vertical longitudinal groove (112) in the vertical section (111).

10. Framework of a vehicle body construction according to one of claims 1 to 7, **characterised in that** the longitudinal section (51) is a bottom or base chord and the bottom or base chord (51) comprises a first, preferably extended flange (57a) and a second, preferably shortened outer flange (57b), the two flanges (57a, 57b) form an angular recess for receiving the end portion of the vertical section (111) and the first flange (57a) and possibly the second flange (57b) are provided on their side faces (59a, 59b) directed towards the vertical section (111) with at least one undercut longitudinal groove (52, 54) for securing the vertical section (111) to the bottom chord (51) by means of comer connecting elements (56a, 56b).

11. Framework of a vehicle body construction according to claims 5 and 10, **characterised in that** the vertical section (111) is connected to the bottom or base chord (51) by means of one or two comer connecting elements (56b) and the comer connecting element (56b) is secured both to the vertical section (111) and to the first and second flanges (57a, 57b) of the bottom or base chord (51), screws passing through the comer connecting element (56b) and engaging in the threaded holes (122) in insert parts (121) introduced into the undercut longitudinal grooves (52, 54) in the first (57a) and second flanges (57b) and into the undercut vertical longitudinal groove (112) in the vertical section (111).

12. Framework of a vehicle body construction according to one of claims 1 to 7, **characterised in that** the longitudinal section (41) is a central chord and the central chord (41) is T-shaped and comprises a central, elevated, box-shaped part (44) and two lateral flanks (45) with outer side faces offset towards the interior of the vehicle body, at least one respective undercut longitudinal groove (42) crossing behind the vertical section being formed in the outer side faces of the flanks (45) in order to secure the vertical section (111) to the central chord (41), the vertical post (111) being divided into two parts (111a, 111b) at the joint, the central chord (41) passing through between the two parts (111a, 111b) by means of its central part (44), the two parts (111a, 111b) abutting laterally against the central part (44) by means of their end faces and the central chord (41) crossing behind the parts (111a, 111b) by means of its two flanks (45).

13. Framework of a vehicle body construction according to claims 5 and 12, **characterised in that** the vertical section (111) is connected to the central chord (41) by means of comer connecting elements (46) and the corner connecting elements (46) are secured to the vertical section (111), to the flanks (45) and to the central part, screws passing through the comer connecting elements (46) and engaging in the threaded holes (122) in insert parts (121) introduced into the undercut vertical longitudinal grooves (112) in the vertical section (111), into undercut longitudinal grooves (42) in the flanks (45) crossing behind the vertical section and into undercut longitudinal grooves (47) in the central part.

14. Framework of a vehicle body construction according to claim 12, **characterised in that** the outer side faces of the central part (44) and of the vertical post (111) are aligned with one another.

15. Framework of a vehicle body construction according to one of claims 1 to 6, **characterised in that** the vertical section (101) crossing the longitudinal section (11) is continuous.

16. Framework of a vehicle body construction according to one of claims 1 to 15, **characterised in that** one or more section-like attachable elements (14) are attached to the outer side face of the longitudinal section (11) between two vertical sections (101), the outer side faces of the section-like attachable elements (14) and of the vertical sections (101) being aligned with one another.

17. Framework of a vehicle body construction according to claim 16, **characterised in that** the section-like attachable elements (46) are secured to the longitudinal section (12) by means of screws passing through the attachable element (46) and engaging in the threaded holes (122) in insert parts (121) introduced into the undercut longitudinal groove (12) or longitudinal grooves in the longitudinal section (11).

18. Framework of a vehicle body construction according to one of claims 16 to 17, **characterised in that** the section-like attachable elements (46) are simultaneously comer connecting elements and the vertical section (101) is secured to the longitudinal section (11) at least partially via the section-like attachable elements (46).

19. Framework of a vehicle body construction according to one of claims 16 to 18, **characterised in that** the section-like attachable elements (46) comprise connection points, in particular groove-shaped connection points, for fastening panel-type elements (123) and/or cladding parts (124, 125).

20. Framework of a vehicle body construction according to one of claims 1 to 19, **characterised in that** the insert part (121) is a parallelogrammic clamping plate which can be swung into position in the undercut longitudinal groove (133).

21. Framework of a vehicle body construction according to one of claims 1 to 19, **characterised in that** the insert part is a prismatic insert part, preferably insert strip, which can be inserted laterally into the undercut longitudinal groove and receives a plurality of screw connections.

## Revendications

1. Ossature pour la construction d'une caisse de véhicule, en particulier pour des véhicules routiers ou des véhicules ferroviaires pour le transport de personnes, comprenant une structure de paroi latérale qui contient une face intérieure tournée vers l'intérieur de la caisse de véhicule et une face extérieure tournée vers l'extérieur, ainsi que des profilés longitudinaux (1, 11, 21, 31, 41, 51, 141) et des profilés verticaux (101, 111, 140) formant des emplacements de liaison en croix, dans laquelle les profilés longitudinaux sont des profilés de ceinture et les profilés verticaux sont des colonnes de paroi latérale, des montants de fenêtres et/ou des montants de porte, et les profilés longitudinaux est verticaux se croisent sous un angle de 90°,
dans laquelle, au niveau d'un, de plusieurs, ou de tous les emplacements de liaison en croix entre profilé longitudinal (1, 11, 21, 31, 41, 51, 141) et profilé vertical (101, 111, 140), le profilé longitudinal est réalisé de manière continue et avec une structure de section transversale uniforme à la traversée de l'emplacement de liaison en croix, et contient une rainure longitudinale (2, 12, 22, 32, 42, 52, 142) en contre-dépouille qui s'étend en direction longitudinale du profilé, et le profilé vertical est relié de façon détachable au profilé longitudinal via au moins une liaison vissée (3, 13, 23, 33, 43, 53), et la liaison vissée est réalisée par au moins une vis (134) qui traverse le profilé vertical ou un élément de liaison (36, 46, 56, 146, 131) et qui s'engage dans le perçage taraudé (122) d'une pièce d'insert (121) montée dans la rainure longitudinale en contre-dépouille en ancrant la pièce d'insert (121),
**caractérisée en ce que**, au moins la rainure longitudinale en contre-dépouille du profilé longitudinal croise par derrière et du côté intérieur le profilé vertical et s'applique contre la face latérale côté intérieur du profilé vertical.

2. Ossature pour la construction d'une caisse de véhicule selon la revendication 1, **caractérisée en ce que** le profilé longitudinal (1, 11, 21, 31, 41) contient deux ou plusieurs rainures longitudinales parallèles (2, 12, 22, 32, 42, 52) en contre-dépouille qui croisent par derrière le profilé vertical (101, 111, 140) en vue de la liaison détachable avec le profilé vertical.

3. Ossature pour la construction d'une caisse de véhicule selon l'une ou l'autre des revendications 1 et 2, **caractérisée en ce que** les profilés longitudinaux (1, 11, 21, 31, 41) et les profilés verticaux (101, 111, 140) sont des profilés extrudés en métal léger, en particulier en aluminium ou en alliage d'aluminium, et les profilés longitudinaux sont une ceinture de toiture, une ceinture médiane et/ou une ceinture de plancher ou de socle d'une structure de paroi latérale.

4. Ossature pour la construction d'une caisse de véhicule selon l'une des revendications 1 à 3, **caractérisée en ce que** le profilé vertical (101) contient des flancs de profilé (102) latéraux agencés dans le prolongement de la surface latérale intérieure et s'étendant parallèlement au plan de la paroi latérale.

5. Ossature pour la construction d'une caisse de véhicule selon l'une des revendications 1 à 3, **caractérisée en ce que** le profilé vertical (111) est un profilé creux et contient une rainure longitudinale verticale (112) respective en contre-dépouille sur ses surfaces transversales latérales disposée transversalement et de préférence perpendiculairement par rapport au plan de la paroi latérale.

6. Ossature pour la construction d'une caisse de véhicule selon la revendication 5, **caractérisée en ce que** le profilé vertical (111, 140) est fixé sur le profilé longitudinal (31, 41, 51, 141) au moyen d'éléments de liaison de coin (36a, 36b ; 46 ; 56a ; 146), et **en ce que** des vis traversent les éléments de liaison de coin (36a, 36b ; 46 ; 56a ; 146) et s'engagent dans le perçage taraudé (122) de pièces d'insert (121) qui sont montées dans les rainures longitudinales en contre-dépouille (32, 42, 52, 142) du profilé longitudinal et dans les rainures longitudinales verticales (112, 143) en contre-dépouille du profilé vertical.

7. Ossature pour la construction d'une caisse de véhicule selon l'une des revendications 1 à 6, **caractérisée en ce que** le profilé longitudinal (41) contient au moins deux surfaces latérales extérieures qui s'étendent parallèlement au plan de la paroi latérale et qui sont décalées l'une par rapport à l'autre et perpendiculairement au plan de la paroi latérale par un gradin qui s'étend dans la direction longitudinale du profilé, et **en ce que** la surface latérale ou les surfaces latérales décalées vers l'intérieur de la caisse de véhicule contient/contiennent au moins une rainure longitudinale (42) en contre-dépouille et croise/croisent le profilé vertical (111a, 111b) par derrière, et la surface latérale décalée vers le côté extérieur de la caisse de véhicule est en affleurement avec la surface latérale extérieure du profilé vertical (111a, 111b).

8. Ossature pour la construction d'une caisse de véhicule selon l'une des revendications 1 à 7, **caractérisée en ce que** le profilé longitudinal (31) est une ceinture de toiture, et ladite ceinture de toiture (31) contient une première branche (37a), de préférence prolongée, et une seconde branche (37b) agencée du côté extérieur, et de préférence raccourcie, et **en ce que** les deux branches (37a, 37b) forment un évidement de forme angulaire pour recevoir le tronçon terminal du profilé vertical (111), ladite première branche (37a) et le cas échéant ladite seconde branche (37b) contenant, sur leurs surfaces latérales (39a, 39b) tournées vers le profilé vertical (111), au moins une rainure longitudinale (32, 34) en contre-dépouille pour fixer le profilé vertical (111) sur la ceinture de toiture (31) au moyen d'éléments de liaison de coin (36a, 36b).

9. Ossature pour la construction d'une caisse de véhicule selon les revendications 5 et 8, **caractérisée en ce que** le profilé vertical (111) est relié à la ceinture de toiture (31) par un ou deux élément(s) de liaison de coin (36b), ledit élément de liaison de coin (36b) étant fixé aussi bien sur le profilé vertical (111) que sur la première et la seconde branche (37a, 37b) de la ceinture de toiture (31), et **en ce que** des vis traversent l'élément de liaison de coin (36b) et s'engagent dans les perçages taraudés (122) de pièces d'insert (121) qui sont montées dans les rainures longitudinales (32, 34) en contre-dépouille de la première branche (37a) et de la seconde branche (37b) et dans une rainure longitudinale verticale (112) en contre-dépouille du profilé vertical (111).

10. Ossature pour la construction d'une caisse de véhicule selon l'une des revendications 1 à 7, **caractérisée en ce que** le profilé longitudinal (51) est une ceinture de plancher ou de socle, et ladite ceinture de plancher ou de socle (51) comprend une première branche (57a), de préférence prolongée, et une seconde branche (57b) agencée du côté extérieur, et de préférence raccourcie, et **en ce que** les deux branches (57a, 57b) forment un évidement de forme angulaire pour recevoir le tronçon terminal du profilé vertical (111), et la première branche (57a) et le cas échéant la seconde branche (57b) comporte(nt), sur sa/leurs surfaces latérales (59 a, 59 b) tournée(s) vers le profilé vertical (111), au moins une rainure longitudinale (52, 54) en contre-dépouille pour fixer le profilé vertical (111) sur la ceinture de plancher (51) au moyen d'éléments de liaison de coin (56a, 56b).

11. Ossature pour la construction d'une caisse de véhicule selon les revendications 5 et 10, **caractérisée en ce que** le profilé vertical (111) est relié à la ceinture de plancher ou de socle (51) via un ou deux éléments de liaison de coin (56b), et ledit élément de liaison de coin (56b) est fixé aussi bien sur le profilé vertical (111) que sur la première et la seconde branche (57a, 57b) de la ceinture de plancher ou de socle (51), et **en ce que** des vis traversent l'élément de liaison de coin (56b) et s'engagent dans le perçage taraudé (122) de pièces d'insert (121) qui sont montées dans les rainures longitudinales (52, 54) en contre-dépouille de la première (57a) et de la seconde (57b) branche, et dans la rainure longitudinale verticale (112) en contre-dépouille du profilé vertical (111).

12. Ossature pour la construction d'une caisse de véhicule selon l'une des revendications 1 à 7, **caractérisée en ce que** le profilé longitudinal (41) est une ceinture médiane, et ladite ceinture médiane (41) est réalisée en forme de T et comprend une partie de profilé centrale (44) surélevée et en forme de caisson, et deux flancs de profilés latéraux (45) avec des surfaces latérales extérieures décalées vers l'intérieur de la caisse de véhicule, au moins une rainure longitudinale respective (42) en contre-dépouille qui croise par derrière le profilé vertical et destinée à fixer le profilé vertical (111) sur la ceinture médiane (41) est ménagée dans les surfaces latérales extérieures des flancs de profilés (45), et le profilé vertical (111) est subdivisé en deux parties de profilé (111a, 111b) à l'emplacement de liaison, et **en ce que** la ceinture médiane (41) traverse, entre les deux parties de profilé (111a, 111b), par sa partie de profilé centrale (44), les deux parties de profilé (111a, 111b) venant buter par leurs surfaces frontales terminales latéralement contre la partie de profilé centrale (44), et la ceinture médiane (41) croise par derrière les parties de profilé (111a, 111b), par ses deux flancs de profilé (45).

13. Ossature pour la construction d'une caisse de véhicule selon les revendications 5 et 12, **caractérisée en ce que** le profilé vertical (111) est relié à la ceinture médiane (41) par des éléments de liaison de coin (46), et les éléments de liaison de coin (46) sont fixés sur le profilé vertical (11), sur les flans de profilé (45) et sur la partie de profilé centrale, et **en ce que** des vis traversent les éléments de liaison de coin (46) et s'engagent dans les perçages taraudés (122) de pièces d'insert (121) qui sont montées dans les rainures longitudinales verticales (112) en contre-dépouille du profilé vertical (111), et dans des rainures longitudinales (42) des flancs de profilé (45) en contre-dépouille et croisant par derrière le profilé vertical, ainsi que dans des rainures longitudinales (47) en contre-dépouille de la partie de profilé centrale.

14. Ossature pour la construction d'une caisse de véhicule selon la revendication 12, **caractérisée en ce que** les surfaces latérales extérieures de la partie de profilé centrale (44) et du profilé vertical (111) sont conjointement en affleurement.

15. Ossature pour la construction d'une caisse de véhicule selon l'une des revendications 1 à 6, **caractérisée en ce que** le profilé vertical (101) qui croise le profilé longitudinal (111) est réalisé continu.

16. Ossature pour la construction d'une caisse de véhicule selon l'une des revendications 1 à 15, caractérisée un en ce qu'un ou plusieurs éléments rapportés (14) en forme de profilé sont montés entre deux profilés verticaux (101) sur la surface latérale extérieure du profilé longitudinal (11), les surfaces latérales extérieures des éléments rapportés (14) en forme de profilé et des profilés verticaux (101) étant conjointement en affleurement.

17. Ossature pour la construction d'une caisse de véhicule selon la revendication 16, **caractérisée en ce que** les éléments rapportés (46) en forme de profilé sont fixés sur le profilé longitudinal (12) au moyen de vis qui traversent l'élément rapporté (46) et qui sont engagées dans le perçage taraudé (122) de pièces d'insert (121) dans la ou les rainure(s) longitudinale(s) (12) en contre-dépouille du profilé longitudinal (11).

18. Ossature pour la construction d'une caisse de véhicule selon l'une ou l'autre des revendications 16 et 17, **caractérisée en ce que** les éléments rapportés (46) en forme de profilé sont simultanément des éléments de liaison de coin, et le profilé vertical (101) est fixé sur le profilé longitudinal (11) au moins partiellement via les éléments rapportés (46) en forme de profilé.

19. Ossature pour la construction d'une caisse de véhicule selon l'une des revendications 16 à 18, **caractérisée en ce que** les éléments rapportés (46) en forme de profilé contiennent des emplacements de raccordement, en particulier des emplacements de raccordement en forme de gorge, pour la fixation d'éléments de vitres (123) et/ou de pièces d'habillage (124, 125).

20. Ossature pour la construction d'une caisse de véhicule selon l'une des revendications 1 à 19, **caractérisée en ce que** la pièce d'insert (121) est une plaquette de coincement réalisée sous forme de parallélogramme et capable de basculer dans la rainure longitudinale (133) en contre-dépouille.

21. Ossature pour la construction d'une caisse de véhicule selon l'une des revendications 1 à 19, **caractérisée en ce que** la partie d'insert est réalisée sous la forme d'une partie d'insert prismatique susceptible d'être introduite latéralement dans la rainure longitudinale en contre-dépouille et recevant plusieurs liaisons vissées, de préférence une barrette d'insert.
